# EUROPÄISCHE PATENTSCHRIFT

(11) **EP 1 860 597 B1**
(45) Veröffentlichungstag und Bekanntmachung des Hinweises auf die Patenterteilung: **12.08.2009**
(21) Anmeldenummer: 06405224.4
(22) Anmeldetag: 23.05.2006
(51) Int. Cl.: G06K 19/077, H01Q 7/00, B61L 25/04

(54) **Übertragungseinheit für ein Induktives Identifikationssystem und Induktives Identifikationssystem**
Transmission unit for an inductive identification system and inductive identification system
Unité de transfert pour un système d'identification inductif et système d'identification inductif

(43) Veröffentlichungstag der Anmeldung: 28.11.2007
(73) Patentinhaber: Schweizerische Bundesbahnen SBB, 3000 Bern 65 (CH)
(72) Erfinder: Baiker, Stefan, 4059 Basel (CH)
(74) Vertreter: Rutz, Peter

(56) Entgegenhaltungen:
- EP-A- 1 548 674
- WO-A-96/32755
- US-A- 5 221 831

## Beschreibung

Die Erfindung betrifft eine Übertragungseinheit, insbesondere eine Leseeinheit oder ein aktiver oder passiver Transponder für ein induktives Identifikationissystem und ein induktives Identifikationssystem.

Die Erfindung betrifft insbesondere eine Übertragungseinheit, deren Antenne in metallischer Umgebung angeordnet wird.

Wie in [1], Klaus Finkenzeller, RFID-Handbuch, 3. Auflage, Carl Hanser Verlag, München 2002, Seite 1, beschrieben, haben automatische Identifikationsverfahren (Auto-ID) in vielen Dienstleistungsbereichen, wie in der Beschaffungs- und Distributionslogik, im Handel, in Produktionsbetrieben, insbesondere in Materialflusssystemen, in den letzten Jahren grosse Verbreitung gefunden (siehe z.B. [2], PHILIPS, TAGSYS, Texas Instruments Inc., White Paper, ITEM-LEVEL VISIBILITY IN THE PHARMACEUTICAL SUPPLY CHAIN, White Paper, Juli 2004) .

Von grosser Bedeutung unter den automatischen Identifikationssystemen sind Transpondersysteme, bei denen, ein Transponder an den zu identifizierenden Objekten angebracht wird und mittels eines Lesegeräts und unter Verwendung magnetischer und/oder elektromagnetischer Felder abgefragt wird. Da bei diesen Systemen normalerweise Radiowellen angewendet werden, werden sie auch als RFID-Syatome bezeichnet.

Das Lesegerät beinhaltet typischerweise ein Hochfrequenzmodul (Sender und Empfänger), eine Steuereinheit, ein Koppelelement und normalerweise eine Schnittstelle, die es erlaubt, Daten mit einem Rechner, beispielsweise einem Zentralrechner eines Verkehrsleitsystems oder einem dezentralen Personalcomputer, auszutauschen.

Der Transponder, der als Träger der Identifikationsdaten und gegebenenfalls weiterer Daten dient, besteht normalerweise aus einem mit einem Mikrochip und einer Antenne versehenen Substrat. Beispielsweise können in einem an einen Container angebrachten Transponder die Identifikationsdaten des Containers sowie Daten über die im Container gelagerte Fracht und gegebenenfalls Daten betreffend den Zustand dieser Fracht gespeichert sein (siehe z.B. [3], EP 1 408 207 A1).

Ausserhalb des Ansprechbereichs des Lesegeräts verhält sich der Transponder, der in der Regel keine eigne Stromquelle besitzt, vollkommen passiv. Erst innerhalb des Ansprechbereichs eines Lesegeräts wird der Transponder aktiv. Die zum Betrieb des Transponders benötigte Energie wird bei diesen Systemen, ebenso wie der Takt und die Daten, drahtlos zum Transponder übertragen.

Wie in [1], Seiten 22-23 weiter beschrieben ist, sind die wichtigsten Unterscheidungskriterien für RFID-Systeme die Betriebsfrequenz des Lese- bzw. des Lese- und Schreibgerätes (Transceiver), das physikalische Kopplungsverfahren und die Reichweite.

RFID-Systeme mit Schreib- und Lesereichweiten bis zu etwa 1 m werden dem Begriff "Remote-coupling-Systems" untergeordnet, die fast ausschliesslich eine induktive (magnetische) Kopplung von Lesegerät und Transponder und Frequenzen typischerweise in den Bereichen von 135 kHz, 13,56 MHz oder 27,125 MHz verwenden, in denen die Wellenlängen um ein vielfaches grösser sind, als die Entfernung zwischen Leser-Antenne und Transponder.

In [1], Seite 113 ist weiter beschrieben, dass beim Einsatz von RFID-Systemen mit induktiver Kopplung häufig die Anforderung gestellt wird, Antennen von Lesegeräten oder Transpondern in metallischer Umgebung zu montieren. Die Montage induktiv gekoppelter Antennen unmittelbar auf einer metallischen Oberfläche ist gemäss [1] jedoch nicht möglich, da der magnetische Fluss im Metallkörper Wirbelströme induziert, die dem Feld des Lesegerätes entgegenwirken und damit das magnetische Feld an der Oberfläche des Metallkörpers derart dämpfen, dass eine Kommunikation zwischen Lesegerät und Transponder nicht mehr möglich ist. Gemäss [1] ist es dabei gleichgültig, ob die auf der Metalloberfläche montierte Antennenspule (z.B. Transponderspule) das magnetische Feld erzeugt oder ob das Feld von einer weiteren Antennenspule (Lesegerätspule) von ausserhalb auf die Metalloberfläche auftritt.

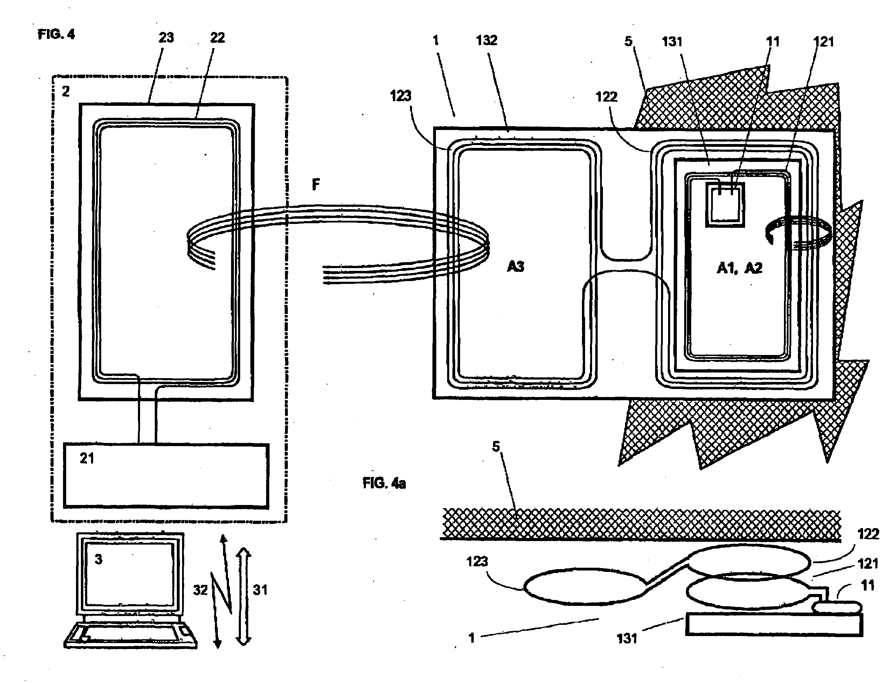

Zur Beseitigung dieses Problems wird in [1], Seite 113 (siehe Abb. 4.52) daher vorgeschlagen, eine Schicht mit hochpermeablem Ferrit zwischen der Antenne und der Oberfläche des Metallkörpers vorzusehen.

Nachteilig bei dieser Lösung ist, dass die Ferritschicht relativ viel Platz in Anspruch nimmt und nicht flexibel ist, weshalb die Übertragungseinheiten weiterhin nicht einfach montierbar sind. Bei der Montage von Antennen auf Ferritoberflächen ist zudem zu berücksichtigen, dass die Induktivität der Antennenspulen durch die hohe Permeabilität des Ferritmaterials teilweise erheblich vergrössert wird, so dass ein Neuabgleich der Resonanzfrequenz oder bei Lesegeräten eine Neudimensionierung des Anpassnetzwerks notwendig werden kann.

Der vorliegenden Erfindung liegt daher die Aufgabe zugrunde, eine Übertragungseinheit für ein induktives Identifikationssystem und ein induktives Identifikationssystem anzugeben, bei denen die oben genannten Nachteile bei der Montage der Antennenanordnung in metallischer Umgebung weitgehend vermieden werden.

Insbesondere ist eine Antennenanordnung anzugeben, die ohne die Verwendung einer Ferritschicht auf einer gegebenenfalls unebenen Metalloberfläche montierbar ist und bei der ein Neuabgleich der Resonanzfrequenz oder eine Neudimensionierung des Anpassnetzwerks entfällt.

Diese Aufgabe wird mit einer Übertragungseinheit und einem induktiven Identifikationssystem gelöst, welche die in Anspruch 1 bzw. 12 angegebenen Merkmale aufweisen. Vorteilhafte Ausgestaltungen der Erfindung sind in weiteren Ansprüchen angegeben.

Die Übertragungseinheit des induktiven Identifikationssystems, insbesondere ein Lesegerät oder ein Transponder des induktiven Identifikationssystems, weist eine mit einer Steuereinheit verbundene erste Antennenspule auf, deren Leiterschleifen eine erste Querschnittsfläche auf einem Substrat umschliessen, welches nahe der Oberfläche eines Metallkörpers montiert oder montierbar ist. Die Steuereinheit kann aus einer einzigen integrierten Schaltung, einem so genannten Chip, oder aus mehreren Modulen bestehen.

Erfindungsgemäss ist zwischen der ersten Antennenspule und der Oberfläche des Metallkörpers eine zweite Antennenspule vorgesehen, deren Leiterschleifen, die eine zweite Querschnittsfläche umschliessen, die zur ersten Querschnittsfläche zumindest teilweise deckungsgleich ist, mit einer dritten Antennenspule verbunden sind, deren Leiterschleifen eine dritte Querschnittsfläche umschliessen, welche die erste Querschnittsfläche nicht oder nur teilweise überlappt, wobei die zweite und die dritte Antennenspule derart gewickelt und miteinander verbunden sind, dass beim Empfang eines magnetischen Feldes der in den Leiterschleifen der dritten Antennenspule induzierte Strom in der zweiten Antennenspule ein magnetisches Feld aufbaut, welches zumindest annähernd phasengleich zum empfangenen magnetischen Feld verläuft.

In einer ersten Ausgestaltung der Erfindung wird das empfangene magnetische Feld mittels der zweiten und dritten Antennenspule zwischen der ersten Antennenspule und dem Metallkörper rekonstruiert, so dass die erste Antennenspule gegen magnetische Felder, die durch allfällige wirbelströme im Metallkörper verursacht werden, elektrisch abgeschirmt wird. Das empfangene magnetische Feld bleibt nahe der Metalloberfläche daher ungeschwächt oder wird sogar verstärkt, so dass unabhängig von der Montage der Übertragungseinheit in metallischer Umgebung gute Übertragungsverhaltnisse gewährleistet sind.

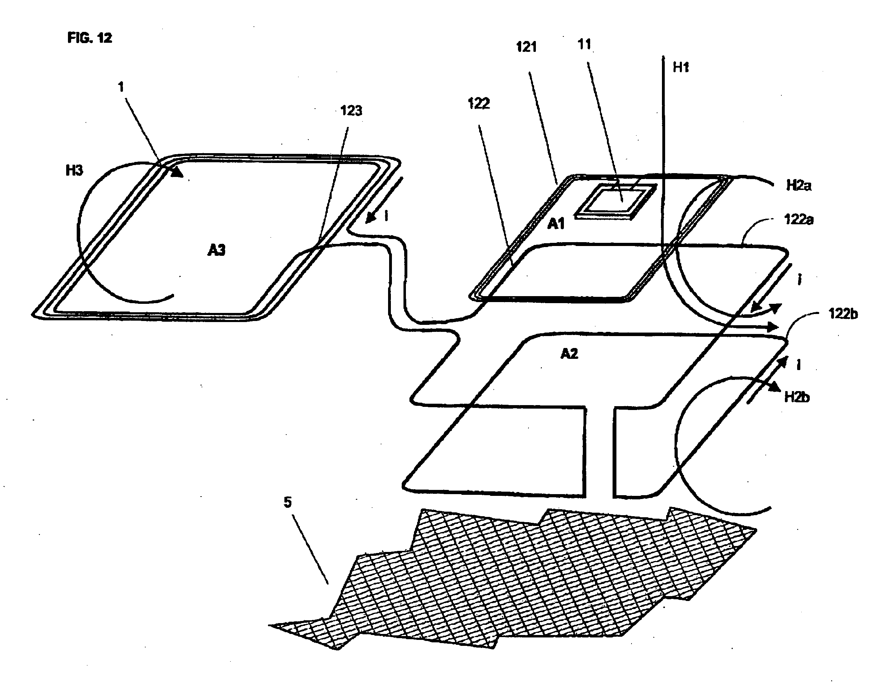

In einer weiteren vorzugsweisen Ausgestaltung wird das beispielsweise vom Lesegerät abgegebene magnetische Feld mittels der zweiten Antennenspule verstärkt und gleichzeitig abgelenkt, so dass die Entstehung von Wirbelströmen weitgehend verhindert wird (siehe Figur 12).

Erfindungsgemässe Übertragungseinheiten weisen in metallischer Umgebung eine Reichweite auf, die mit Reichweiten konventioneller Transponder vergleichbar ist. In nicht metallischer Umgebung, in der erfindungsgemässe Übertragungseinheiten ebenfalls vorteilhaft einsetzbar sind, werden deutlich höhere Reichweiten erzielt.

Die Übertragungseinheiten, die mit minimalen Bauhöhen gefertigt werden können, sind in der Praxis zudem besonders vorteilhaft verwendbar, da sie dünnschichtig auf ein Trägerobjekt montiert werden können und nach der Montage praktisch keine Angriffsflächen bieten. Die durch die dritte Antennenspule verursachte Erhöhung der Gesamtfläche ist demgegenüber nicht störend, da dadurch keine zusätzlichen Angriffsflächen resultieren und zumeist genügend Montagefläche zur Verfügung steht. Besonders vorteilhaft bei der erfindungsgemässen Lösung ist, dass auf die Verwendung von starren (amorphen) Metallen verzichtet werden kann, weshalb ein aus Foliensubstraten, bestehender Transponder an verschiedenen Oberflächenformen befestigt, beispielsweise festgeklebt werden kann.

In einer vorzugsweisen Ausgestaltung werden gleiche oder ähnliche geometrische Abmessungen der Leiterschleifen der ersten und zweiten Antennenspule vorgesehen. Zudem werden die Leiterschleifen der ersten und der zweiten Antennenspule zumindest annähernd konzentrisch angeordnet, so dass das von der zweiten Antennenspule erzeugte magnetische Feld eine optimale Wirkung erzielt.

Die erste Antennenspule einerseits und die zweite und dritte Antennenspule andererseits können auf nur einem Substrat oder auf separaten Substraten angeordnet sein, die vorzugsweise ein mit Klebstoffen versehenes, dünnes Laminat bilden.

Sofern nur ein Substrat verwendet wird, werden die zweite und dritte Antennenspule vorzugsweise auf deren Rückseite montiert. Die erste Antennenspule wird hingegen auf der Frontseite des Substrats angeordnet.

Das erste und/oder das zweite Substrat bzw. das gemeinsame Substrat oder eine damit verbundene wirbelstromfreie Zwischenlage, vorzugsweise eine Folie, werden vorzugsweise aus einer hochpermeablen, amorphen Legierung vorzugsweise aus Ferritmaterialen oder Sinterstoffen gefertigt. Dies erlaubt die Konzentration der Feldlinien im Bereich der ersten Antennenspule, während gleichzeitig störende wirbelströme weiter reduziert werden. Zur Isolation der Antennenspulen gegenüber dem Substrat, oder zur Montage derselben können nicht-leitende Lacke oder Klebstoffe verwendet werden. Ferner kann eine Schutzschicht vorgesehen sein, welche die Antennenspulen überdeckt.

Besonders vorteilhaft kann die die erste, zweite und oder dritte Antennenspule auch in die wirbelstromfreie zwischenlage oder das wirbelstromfreie Substrat eingearbeitet sein. Ein wirbelstromfreies Substrat, auf dem die erste Antennenspule angeordnet oder in das die erste Antennenspule eingearbeitet ist, kann ferner auch vorteilhaft verwendet werden, wenn die die zweite und dritte Antennenspule nicht vorgesehen sind. Die Einarbeitung einer Antennenspule in ein wirbelstromfreies Substrat kann durch Stanzen oder Schneiden beispielsweise mittels eines Lasers durchgeführt werden.

Die zweite oder die dritte Antennenspule wird vorzugsweise ebenfalls mit der Steuereinheit verbunden, so dass diese während des Empfangs oder während des Sendens wahlweise aktivierbar oder deaktivierbar sind. Beispielsweise kann der Stromfluss mittels eines Schalters während des Empfangs oder während des Sendens unterbrochen werden. Zudem kann der Stromfluss in der zweiten und dritten Antennenspule für Modulationszwecke, beispielsweise zur Lastmodulation geöffnet und geschlossen werden (siehe [1], Kapitel 3.2.1.2, Seiten 44ff.).

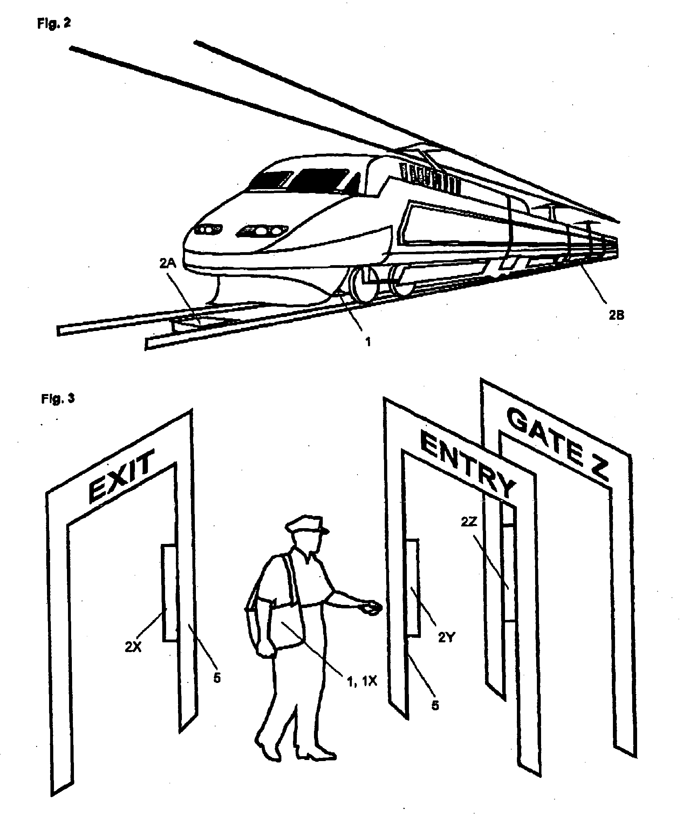

Eine verbesserte Stützwirkung durch die zweite und dritte Antennenspule wird erzielt, wenn die zweite und/oder die dritte Antennenspule mittels wenigstens einer Kapazität, gegebenenfalls eines angeschlossenen Kondensators einen auf die Frequenz der übertragenen Signale abgestimmten Schwingkreis bilden. Vorzugsweise wird dieser während des Signalempfangs zugeschaltet, damit möglichst viel Energie zum passiven Transponder gelangt, die dort in einem Ladekondensator gespeichert wird (siehe z.B. [1], Seite 58, Abb.3.28).

In einer weiteren vorzugsweisen Ausgestaltung sind die Leiterschleifen der ersten Antennenspule derart um das zugehörige Substrat gewickelt, dass je zwei einander auf der Unterseite und der Oberseite des Substrats gegenüberliegende Leiterschleifen parallel zueinander verlaufen und eine Ebene definieren, die mit dem Substrat einen Winkel von 30° bis 60° einschliesst. Möglich ist auch eine senkrechte Ausrichtung der Spulensegmentpaare.

Durch diese Anordnung der Antennenspule resultieren verschiedene Vorteile. Besonders wesentlich ist, dass Feldlinien des magnetischen Feldes erfasst werden können, die parallel zur Oberfläche des Substrats verlaufen. Gleichzeitig erfolgt eine weitgehende Entkopplung der ersten Antennenspule von magnetischen Feldern, die durch allfällige Wirbelströme hervorgerufen werden. Zudem resultiert bei dieser Anordnung der Antennenspule eine Antennencharakteristik, welche erlaubt, die Position und oder Bewegung einer korrespondierenden übertragungseinheit zu erfassen. Mit der Art der Wicklung kann der Antenne zudem eine Richtcharakteristik mit einer oder mehreren bevorzugten Empfangsrichtungen zugeordnet werden. Dadurch können Störsignale, die aus einer ersten Richtung eintreffen unterdrückt und Nutzsignale, die aus einer zweiten Richtung eintreffen, mit höherem Gewinn empfangen werden.

Der Winkel, den die durch die Leiterschleifenpaare definierten Ebenen mit dem Substrat einschliessen, kann von Leiterpaar zu Leiterpaar (d.h., von einander paarweise zugeordneten Segmenten der Leiterschlaufe auf der Oberseite und der Unterseite des Substrats) gleich sein, so dass nur eine bevorzugte Richtcharakteristik resultiert.

Der Winkel, den die durch die Leiterschleifenpaare definierten Ebenen mit dem Substrat einschliessen, kann zwischen Gruppen von Leiterpaaren von einem ersten Winkel a zu einem zweiten Winkel von etwa 180° - a ändern, so dass die Leiterschleife auf der einen Seite des Substrats eine Antenne mit einer ersten Richtcharakteristik und die Leiterschleife auf der ändern Seite des Substrats eine Antenne mit einer zweiten Richtcharakteristik bildet.

In einer weiteren vorzugsweisen Ausgestaltung werden die die Abstände b zwischen den Leiterschleifenpaaren in der Mitte des Substrats um ein n-faches grösser gewählt als im Randbereich des Substrats. Beispielsweise kann die erste Antennenspule einen Innenquerschnitt aufweisen, der den Innenquerschnitten von Antennenspulen konventioneller Transponder entspricht. Eine Antenne dieser Art weist daher eine oder mehrere Seitenkeulen und eine frontal ausgerichtete Hauptkeule auf.

Die zuletzt beschriebenen Ausgestaltungen der Übertragungseinheit können wiederum vorteilhaft in Kombination mit der zweiten und dritten Antennenspule verwendet werden. Allerdings kann diese Art der Wicklung der ersten Antennenspule auch ohne die zweite und dritte Antennenspule vorteilhaft verwendet werden.

Nachfolgend wird die Erfindung anhand von Zeichnungen näher erläutert. Dabei zeigt:
- Figur 1: in schematischer Darstellung ein in der Eisenbahntechnik verwendetes induktives Identifikationssystem, das eine mobile Übertragungseinheit bzw. einen mit einer Lokomotive verbundenen Transponder 1 aufweist, der mittels einer Antenne 12 mit der in einem Gleisbett angeordneten Antenne 22 einer stationären Übertragungseinheit bzw. eines Sende- und Empfangsgeräts 2 verbunden ist, das über eine entsprechende Schnittstelle mit einem Rechner 3 verbunden ist;
- Figur 1a: die in Figur 1 schematisch gezeigten Übertragungseinheiten 1, 2 in der praktischen Anwendung;
- Figur 2: eine mit wenigstens einem Transponder 1 versehene Zugskomposition, die einen mit zwei stationären übertragungseinheiten 2A, 2B bzw. Balisen versehenen Gleisabschnitt befährt;
- Figur 3: metallene Pforten oder Schleusen in einem gesicherten Gebäude, die mit stationären Übertragungseinheiten 2X, 2Y, 2Z versehen sind;
- Figur 4: ein induktives Identifikationssystem mit einer erfindungsgemässen Übertragungseinheit 1, die ein erstes Substrat 131 mit einer ersten Antennenspule 121 und einer Steuereinheit 11 aufweist, welches auf einem zweiten, auf einem Metallkörper 5 montierten Substrat 132 aufliegt, auf dem eine im Bereich der ersten Antennenspule 121 angeordnete zweite Antennenspule 122 vorgesehen ist, welche mit einer entfernten dritten Antennenspule 123 verbunden ist;
- Figur 4a: die Übertragungseinheit 1 von Figur 4 in schematischer Darstellung;
- Figur 5: die Übertragungseinheit 1 von Figur 4 in dreidimensionaler Darstellung;
- Figur 6: die Übertragungseinheit 1 von Figur 4 mit nur einem Substrat 13, auf dem die drei genannten Antennenspulen 121, 122, 123 angeordnet sind;
- Figur 7: die Übertragungseinheit 1 von Figur 6 mit einem Kondensator C, der zur Bildung eines Schwingungssystems mit der zweiten und dritten Antennenspule 122, 123 verbunden ist und mit Anschlussleitungen, die von der zweiten Antennenspule 122 zur Steuereinheit 11 geführt sind;
- Figur 8: eine Übertragungseinheit 1 mit einer ersten Antennenspule 121 mit einer Leiterschleife, welche derart um das zugehörige Substrat 13, 131 gewickelt ist, dass auf der Unterseite und der Oberseite des Substrats 13, 131 Segmente der Leiterschleife parallel, jedoch versetzt zueinander verlaufen;
- Figur 9: die Übertragungseinheit 1 von Figur 8 mit einem grösseren Abstand der Leiterschleifen in der Mitte des Substrats 13, 131;
- Figur 10: die übertragungseinheit 1 von Figur 9 mit einem unterschiedlichen Wicklungssinn der Leiterschleifen an den Enden des Substrats 13, 131;
- Figur 11: die Übertragungseinheit 1 von Figur 10 mit einer hochpermeablen, amorphen Zwischenlage 130 und einem hochpermeablen Segment 1300 in der Mitte des Substrats 13, 1300; und
- Figur 12: in schematischer Darstellung ein erfindungsgemässes Antennensystem mit einer zweiten Antennenspule 122, deren Leiterschleifen übereinander in zwei parallel zueinander liegenden Ebenen angeordnet sind.

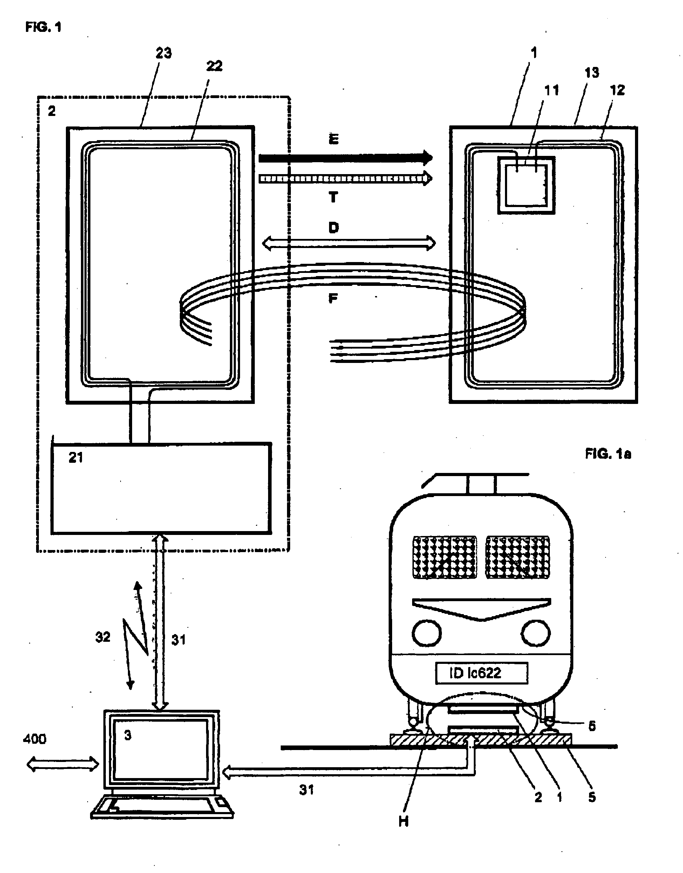

Figur 1 zeigt in schematischer Darstellung ein induktives Identifikationssystem, das eine mobile Übertragungseinheit bzw. einen Transponder 1 aufweist, der mittels einer eraten Antenne 12 mit der Antenne 22 einer stationären Übertragungseinheit 2 (bzw. einem Lesegerät) verbunden ist, die über eine entsprechende drahtgebundene oder drahtlose Schnittstelle 31, 32 mit einem Rechner 3 kommuniziert. Der Rechner 3 ist über eine Anschlussleitung 400 beispielsweise mit einem Verkehrsleitrechner verbunden.

Der Transponder 1 weist eine auf einem Substrat 13 angeordnete Steuereinheit 11 bzw. einen Chip auf, die eine Stromversorgungseinheit, einen Prozessor, eine Speichereinheit sowie gegebenenfalls mit Modulations- und/oder Demodulationsmodulen versehene Sende- und Empfangseinheiten enthält, welche mit einer Antennenspule 12 verbunden sind. Mögliche Bauformen konventioneller Transponder sind in [1], Seite 46, Abbildung 3.16, Seite 48, Abbildung 3.19, Seite 50, Abbildung 3.21, Seite 55, Abbildung 3.26 und Seite 58, Abbildung 3.28 gezeigt.

Die mit dem lokalen Rechner 3 verbundene Sende- und Empfangsgerät 2 bzw. Leseeinheit weist ein Substrat 23 auf, auf dem eine Antennenspule 22 angeordnet ist. Vom Sende- und Empfangsgerät 2 werden eine der Stromversorgung dienende Wechselspannung E sowie ein Taktsignal T zum Transponder 1 übertragen, um diesen in den Betriebszustand zu versetzen, wonach Daten D zwischen dem Transponder 1 und dem Sende- und Empfangsgerät 2 ausgetauscht werden können. Zur induktiven Kopplung der beiden Antennen 12 und 22 sind diese so nahe gegeneinander geführt, dass sie die gegenseitig erzeugten Magnetfelder erfassen können.

Figur 1a zeigt die in Figur 1 schematisch gezeigten Übertragungseinheiten 1, 2 in der praktischen Anwendung. Dabei ist ein Transponder 1 an einer Lokomotive montiert. Das Lesegerät 2 ist hingegen auf einer normalerweise metallenen Schwelle im Gleisbett montiert, weshalb eine metallische Umgebung mit den eingangs beschriebenen Problemen vorliegt.

Figur 2 zeigt eine mit wenigstens einem Transponder 1 versehene Zugskomposition, die einen mit zwei stationären Übertragungseinheiten 2A, 2B bzw. Balisen versehenen Gleisabschnitt befährt. Sofern zwei übertragungseinheiten 2A, 2B vorgesehen sind, um die Fahrtrichtung der Züge feststellen zu können, so können diese durch ein erfindungsgemässes Identifikationssystem mit nur einer Übertragungseinheit 2 ersetzt werden.

Figur 3 zeigt Pforten oder Schleusen in einem gesicherten Gebäude, in einem Warenhaus, in einem Warenlager, in einem Zollgebäude oder einer Bank, die mit stationären Übertragungseinheiten 2X, 2Y, 2Z versehen sind. Typischerweise werden die Übertragungseinheiten an metallischen Rahmen montiert, weshalb auch hier wieder die Probleme mit metallischer Umgebung auftreten können.

Die stationären Obertragungseinheiten 2X, 2Y, 2Z treten jeweils in Kontakt mit mobilen Übertragungseinheiten 1; 1X, die von Personen getragen oder an Waren befestigt sind, um diese zu identifizieren. Mit dem erfindungsgemässen Identifikationssystem ist es nun möglich, nicht nur die Person oder die Waren zu identifizieren, sondern auch die Richtung festzustellen, in der diese die Schleuse durchqueren. Anhand der ermittelten Daten können bekannte Massnahmen ergriffen werden, beispielsweise Meldungen oder Alarme abgegeben oder Schleusen gesperrt werden, sofern Personen oder Waren ein Tor unberechtigt durchqueren.

Die erfindungsgemässen Übertragungseinheiten und das erfindungsgemässe induktive Übertragungssystem werden nachstehend anhand der Figuren 4 bis 11 nachstehend detailliert beschrieben.

Figur 4 zeigt das induktive Identifikationssyetem von Figur 1 mit einer erfindungsgemässen ersten Übertragungseinheit 1, die als Transponder dient, welche mit einer als Lesegerät dienenden konventionellen zweiten Übertragungseinheit 2 kommuniziert.

Die erfindungsgemässe erste Übertragungseinheit 1 weist eine mit einer Steuereinheit verbundene erste Antennenspule 121 auf, deren Leiterschleifen eine erste Querschnittsfläche A1 auf einem ersten Substrat 131 umschliessen, welches nahe der Oberfläche eines Metallkörpers 5 montiert ist.

Zwischen der ersten Antennenspule 121 und der Oberfläche des Metallkörpers 5, bzw. zwischen dem ersten Substrat 131 und dem Metallkörper 5 ist ein zweites Substrat 132 vorgesehen, auf dem eine zweite und eine dritte Antennenspule 122, 123 angeordnet sind. Die Leiterschleifen der zweiten Antennenspule 122, die eine zweite Querschnittsfläche A2 umschliessen, die zur ersten Querschnittsfläche A1 annähernd deckungsgleich ist, sind mit einer dritten Antennenspule 123 verbunden, deren Leiterschleifen eine dritte Querschnittsfläche A3 umschliessen, welche die erste Querschnittsfläche A2 nicht überlappt. Dabei sind die zweite und die dritte Antennenspule 122, 123 derart gewickelt und miteinander verbunden, dass beim Empfang eines magnetischen Feldes der in den Leiterschleifen der dritten Antennenspule 123 induzierte Strom in der zweiten Antennenspule 122 ein magnetisches Feld aufbaut, welches zumindest annähernd phasengleich zum empfangenen magnetischen Feld verlauft.

Durch die zweite und dritte Antennenspule 122, 123 wird das empfangene magnetische Feld daher zwischen der ersten Antennenspule und dem Metallkörper rekonstruiert, so dass die erste Antennenspule 121 gegen magnetische Felder, die durch allfällige Wirbelströme im Metallkörper verursacht werden, elektrisch abgeschirmt wird. Das empfangene magnetische Feld bleibt nahe der Metalloberfläche daher ungeschwächt oder wird sogar verstärkt, so dass unabhängig von der Montage der Übertragungseinheit in metallischer Umgebung gute Übertragungsverhältnisse gewährleistet sind.

Das mit der zweiten und dritten Antennenspule 122, 123 versehene zweite Substrat 132 besteht vorzugsweise aus einer Folie entsprechender Dicke und Festigkeit, so dass ein Transponder resultiert, der eine grössere Querschnittsfläche jedoch eine minimale Bauhöhe aufweist. Sofern auch das erste Substrat 131 elastisch ausgestaltet ist, resultiert ein vorteilhaft montierbares Laminat. Die beiden Substrate 131 und 132 werden beispielsweise verklebt und vergossen.

Figur 4a zeigt die Übertragungseinheit 1 von Figur 4 in schematischer Darstellung. In der gezeigten Ausgestaltung sind die erste und die zweite Antennenspule 121, 122 praktisch deckungsgleich. Die Dritte Antennenspule 123 liegt auf gleicher Höhe wie die erste Antennenspule 121 und ist von dieser örtlich vollständig getrennt.

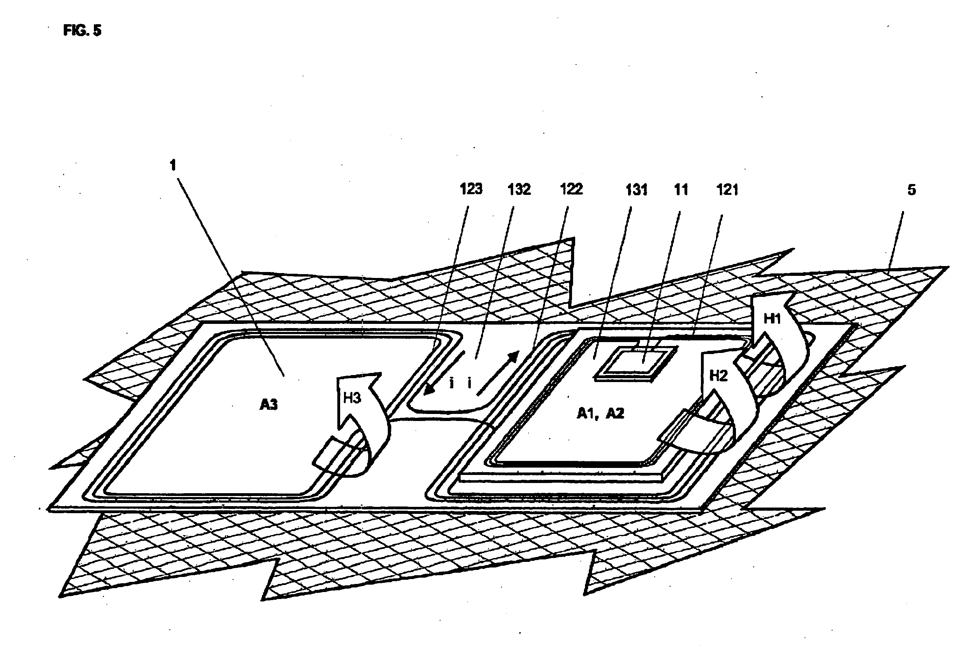

Figur 5 zeigt die Übertragungseinheit 1 von Figur 4 in dreidimensionaler Darstellung. Dabei ist mittels Pfeilen dargestellt, dass bei der ersten Antennenspule 121 ein grösseres magnetisches Feld auftritt als bei der dritten Antennenspule 123, da das bei der dritten Antennenspule 123 auftretende magnetische Feld H3 für den Aufbau eines magnetischen Feldes H2 bei der zweiten Antennenspule 122 verwendet wird, durch welches das dortige magnetische Feld gestützt und erhöht wird.

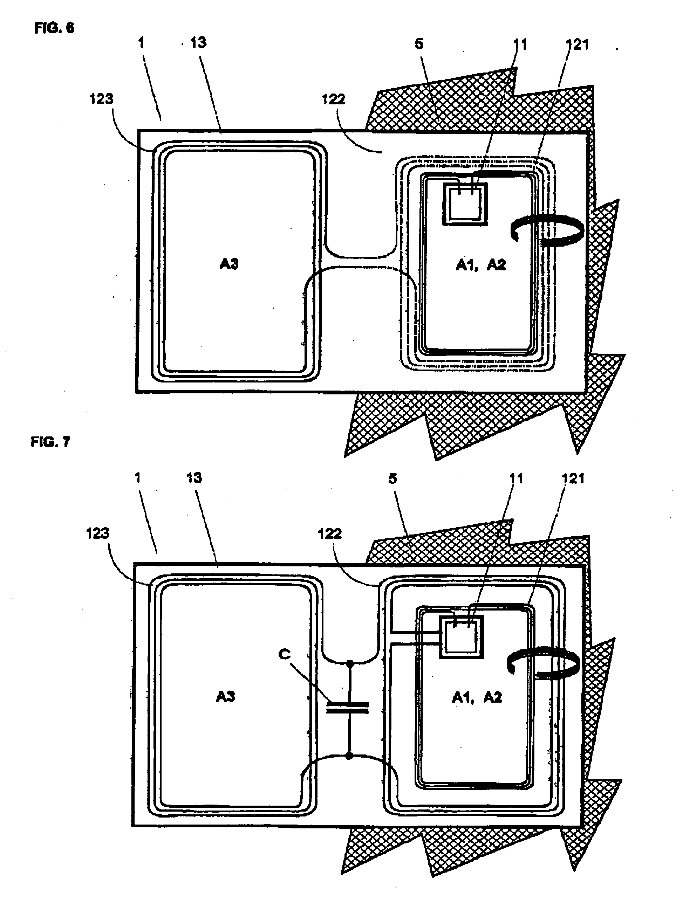

Figur 6 zeigt die Übertragungseinheit 1 von Figur 4 mit nur einem Substrat 13, auf dem die drei genannten Antennenspulen 121, 122, 123 angeordnet sind. Die Ausgestaltung von Figur 4 erlaubt die erfindungsgemässe Ergänzung konventioneller Transponder, indem ein solcher auf ein passend gewähltes Substrat 132 mit einer zweiten und dritten Antennenspule 122, 123 aufgebracht wird. Vorzugsweise wird jedoch nur ein Substrat 13 verwendet, auf das die erste, die zweite und die dritte Antennenspule 121, 122, 123 aufgebracht werden. Beispielsweise kann eine Folie als Substrat verwendet werden, auf deren Frontseite die erste und auf deren Rückseite die zweite und die dritte Antennenspule angeordnet sind. Der Transponder kann in diesem Fall elastisch und mit minimaler Bauhöhe gefertigt werden,

Figur 7 zeigt die Übertragungseinheit 1 von Figur 6 mit einem Kondensator C, der zusammen mit der zweiten und dritten Antennenspule 122, 123 ein Schwingungssystem bildet, das auf die Frequenz der von der korrespondierenden Übertragungseinheit 2 abgegebenen Signale abgestimmt ist. Vorzugsweise wird das Schwingungssystem auf die Signale abgestimmt, mittels derer die Stromversorgung des Transponders 1 bewirkt wird. Die erfindungsgemässe Lösung kann jedoch bei allen Transpondertypen angewendet werden, nämlich passiven Transpondern, die fremd versorgt werden, und aktiven Transpondern, die eine eigene Stromquelle aufweisen. Zur Abstimmung des Schwingungssystems kann auch wenigstens eine Induktivität vorgesehen werden. Sofern das Schwingungssystem breitbandiger arbeiten soll, kann es mittels eines Widerstandes bedämpft werden. Alternativ können die zweite und dritte Antennenspule 122, 123 mittels Kapazitäten zu Schwingungssystemen ausgebaut werden, welche abweichende Resonanzfrequenzen aufweisen.

Bei der Übertragungseinheit von Figur 7 ist die zweite Antennenspule 122 zudem an die Steuereinheit 11 angeschlossen, so dass das Spulensystem 122, 123 wahlweise aktivierbar und deaktivierbar und somit auch zur Modulation der vom Transponder 1 zur Leseeinheit 2 übertragenen Signale verwendbar ist. In einer vorzugsweisen Ausgestaltung werden die zweite und dritte Antennenspule 122, 123 beispielsweise nur dann zugeschaltet, wenn der Stromversorgung dienende Signale empfangen werden sollen. Ferner werden die zweite und dritte Antennenspule 122, 123 vorzugsweise auch während der Datenübertragung zwischen Transponder 1 und Lesegerät 2 zugeschaltet.

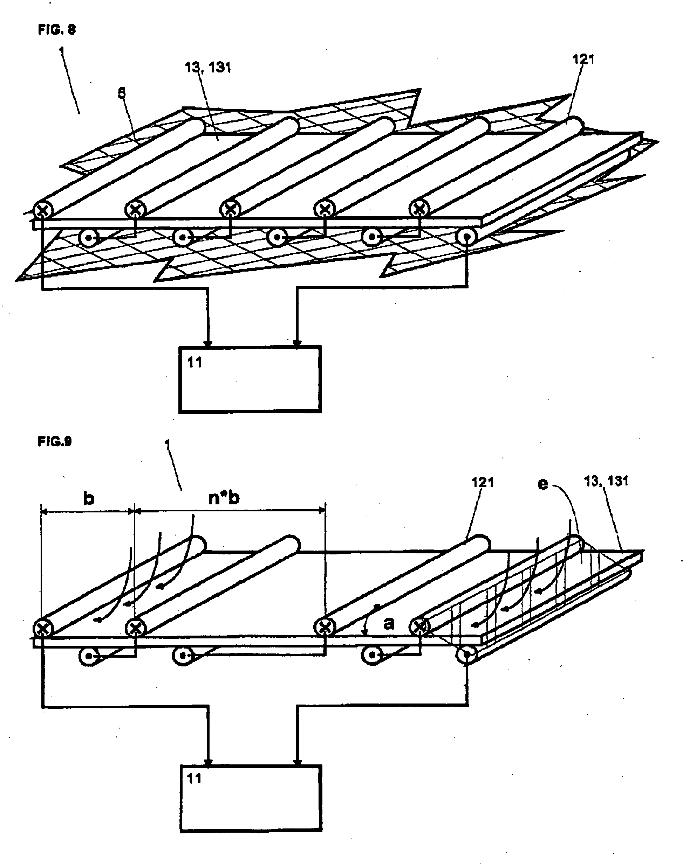

Figur 8 zeigt eine Übertragungseinheit 1, beispielsweise im Kreditkartenformat, mit einer ersten Antennenspule 121 mit einer Leiterschleife, welche derart um das zugehörige Substrat 13, 131 gewickelt ist, dass auf der Unterseite und der Oberseite des Substrats 13, 131 Segmente der Leiterschleife parallel, jedoch versetzt zueinander verlaufen. Dabei definieren auf der Unterseite und der Oberseite des Substrats gegenüberliegende heiterschleifensegmente eine Ebene, die mit dem Substrat einen Winkel im Bereich von 30° bis 60° einschliesst (siehe die Ebene e in Figur 9). Durch diese Ausgestaltung der ersten Antennenspule resultieren die eingangs geschilderten Vorteile. Insbesondere resultiert eine Entkopplung der ersten Antennenspule von Feldern die durch allfällige Wirbelströme hervorgerufen werden.

Zudem resultiert bei dieser Anordnung der ersten Antennenspule eine Antennencharakteristik, welche erlaubt, die Position und oder Bewegung einer korrespondierenden Übertragungseinheit zu erfassen. Bei der Passage einer Übertragungseinheit 1 bzw. 2 tritt innerhalb der Kontaktzeit ein beispielsweise rampenförmiger Signalverlauf auf, der es erlaubt, die Richtung festzustellen, in der sich die korrespondierende Übertragungseinheit 1 bzw. 2 bewegt bzw. in der die korrespondierende Übertragungseinheit 1 bzw. 2 passiert wird.

Zudem kann die Antennenkeule bei der festen Montage der Übertragungseinheit 1 bzw. 2 in eine bevorzugte Richtung ausgerichtet werden. Beispielsweise wird die Antennenkeule eines Transponders 1, der an einem Fahrzeugboden (siehe Figur 1a) montiert wird, derart ausgerichtet, dass der Transponder von unten (z.B. von einer im Gleisbett montierten Leseeinheit) und von der Seite (z.B. von einer mobilen Leseeinheit des Wartungspersonals) ausgelesen werden kann.

Für diese Anwendung, bei der der Transponder 1 aus mehreren Richtungen auslesbar sein soll, ist die Ausgestaltung der Übertragungseinheit 1 von Figur 9 besonders vorteilhaft. Bei dieser Ausgestaltung ist in der Mitte des Substrats 13, 131 ein grösser Abstand der Leiterschleifen vorgesehen, so dass senkrecht zum Substrat 13, 131 die Hauptkeule des Substrats resultiert. Durch die versetzt angeordneten Leiterpaare im Randbereich des Substrats 13, 131 resultieren hingegen Nebenkeulen, die das seitlich Auslesen des Transponders 1 erlauben. Die seitlichen Abstände b bzw. n*b sowie die vorzugsweise durch die Dicke des Substrats 13, 131 festgelegten vertikalen Abstände zwischen den Leitersegmenten werden je nach Anwendung bedarfsweise gewählt.

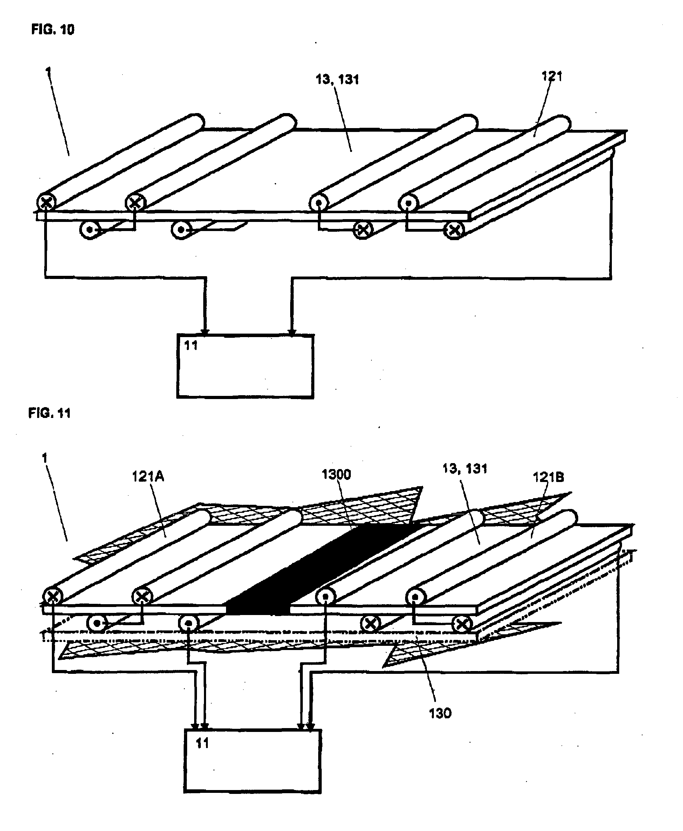

Figur 10 zeigt die Übertragungseinheit 1 von Figur 9 mit einer Leiterschleife, die an den Enden des Substrats 13, 131 einen unterschiedlichen wicklungssinn aufweisen. Diese Ausgestaltung erlaubt es, die relative Bewegungsrichtung der korrespondierenden Übertragungseinheit besonders einfach festzustellen.

Figur 11 zeigt die Übertragungseinheit 1 von Figur 10 mit einer hochpermeablen, amorphen Zwischenlage 130 und einem hochpermeablen Segment 1300 in der Mitte des Substrats 13, 1300. Durch die hochpermeable, amorphe Zwischenlage 130 erfolgt eine weitere Unterdrückung von Wirbelströmen. Das Segment 1300 dient der Erhöhung des magnetischen Flusses durch die erste Antennenspule 121.

Ferner ist die erste Antennenspule 121 in zwei Spulenhälften 121A, 121B aufgeteilt, die getrennt voneinander mit der Steuereinheit 11 verbindbar sind. Diesbezüglich resultieren verschiedene zusätzlich Möglichkeiten zur Auswertung oder Modulation der Signale. Beispielsweise können die unterschiedlich gewickelten Spulenhälften 121A, 121B entsprechend den zu übertragenen Daten abwechslungsweise aktiviert werden, so dass eine Phasenmodulation der Signale resultiert, welche hohe Datenraten zulässt. Zudem können die zwei Spulenhälften 121A, 121B auch in Kombination betrieben bzw. zusammengeschaltet werden.

Figur 12 zeigt in schematischer Darstellung ein erfindungsgemässes Antennensystem mit einer zweiten Antennenspule 122, deren Leiterschleifen übereinander in zwei vorzugsweise parallel zueinander liegenden Ebenen angeordnet sind, die beispielsweise durch die Oberseite und Unterseite des Substrats 132 definiert sind. In der dritten Antennenspule 123 wird durch das lokal auftretende Magnetfeld H3 des Lesegerätes 2 der Strom i induziert, welcher der zweiten Antennenspule 122 zugeführt wird. In der zweiten Antennenspule 122 wird der Strom i in den Leiterschleifen 122a, 122b der beiden Ebenen in entgegen gesetzten Richtungen geführt, so dass die Feldlinien der resultierenden Magnetfelder H2a, H2b in gleicher Richtung zwischen der oberen und unteren Leiterschleife 122a, 122b nach aussen verlaufen. Durch diese Massnahme werden gleichzeitig auch die Feldlinien des vom Lesegerät 2 empfangenen Magnetfelds H1 in derselben Richtung durch die erste Antennenspule 121 hindurch und zwischen der oberen und unteren Leiterschleife 122a, 122b nach aussen geführt. Dabei wird weitgehend verhindert, dass die Feldlinien der Magnetfelder in den Metallkörper eindringen und Wirbelströme verursachen können. Der Feldverlauf kann variiert werden, indem die Grössen der von den Leiterschleifen 122a, 122b eingeschlossenen Querschnittsflächen individuell geändert werden.

Das erfindungsgemässe Identifikationssystem wurde in bevorzugten Ausgestaltungen beschrieben und dargestellt. Anhand der erfindungsgemässen Lehre sind jedoch weitere fachmännische Ausgestaltungen realisierbar. Insbesondere kann der Fachmann ausgehend von der erfindungsgemässen Lehre die für die jeweilige Anwendung passenden Antennenanordnungen und Substrate vorsehen. Die Antennenspulen 121, 122, 123 können in beliebiger Form und mit beliebigen Techniken auf die Substrate 13, 131, 132 aufgetragen oder gar in diese eingearbeitet werden. Die Windungszahlen und Querschnitte sind entsprechend den jeweiligen Gegebenheiten und Anforderungen zu wählen. Sofern der Querschnitt der dritten Antennenspule relativ gross ist, kann beispielsweise die Windungszahl der zweiten Antennenspule erhöht werden.

Die erfindungsgemässe Übertragungseinheit ist in metallischer aber auch in nicht-metallischer Umgebung vorteilhaft einsetzbar.

### Literaturverzeichnis

[1] Klaus Finkenzeller, RFID-Handbuch, 3. Auflage, Carl Hanser Verlag, München 2002
[2] PHILIPS, TAGSYS. Texas Instruments Inc., White Paper, ITEM-LEVEL VISIBILITY IN THE PHARMACEUTICAL SUPPLY CHAIN. White Paper, July 2004
[3] EP 1 408 207 A1

## Patentansprüche

1. Übertragungseinheit (1; 2) eines induktive Identifikationssystems, insbesondere ein Lesergerät oder ein Transponder eines induktiven Identifikationssystems, mit einer mit einer Steuereinheit (11, 21) verbundenen ersten Antennenspule (121), deren Leitersichleifen eine erste Querschnittsfläche (A1) auf einem Substrat (13, 131) umschliessen, welches insbesondere nahe der Oberfläche eines Metallkörpers (5) montiert oder montierbar ist, **dadurch gekennzeichnet, dass** zwischen der ersten Antennenspule (121) und der Oberfläche des Metallkörpers (5) eine zweite Antennenspule (122) vorgesehen ist, deren Leiterschleifen, die eine zweite Querschnittsfläche (A2) umschliessen, die zur ersten Querschnittsfläche (A1) zumindest teilweise deckungsgleich ist, mit einer dritten Antennenspule (123) verbunden sind, deren Leiterschleifen eine dritte Querschnittafläche (A3) umschliessen, welche die erste Querschnittsfläche (A2) nicht oder nur teilweise überlappt, wobei die zweite und die dritte Antennenspule (122, 123) derart gewickelt und miteinander verbunden sind, dass beim Empfang eines magnetischen Feldes der in den Leiterschleifen der dritten Antennenspule (123) induzierte Strom in der zweiten Antennenspule (122) ein magnetisches Feld aufbaut, welches zumindest annähernd phasengleich zum empfangenen magnetischen Feld verläuft.

2. Übertragungseinheit (1; 2) nach Anspruch 1, **dadurch** gekenntzeichnet, dass die geometrischen Abmessungen der Leiterschleifen der ersten und zweiten Antennenspule (121, 122) zumindest annähernd gleich sind und/oder dass die ersten und zweiten Antennenspule (121, 122) zumindest annähernd konzentrisch angeordnet sind.

3. Übertragungseinheit (1; 2) nach Anspruch 1 oder 2, **dadurch gekennzeichnet, dass** die erste Antennenspule (121) auf einem ersten Substrat (131) und die zweite und dritte Antennenspule (122, 123) auf einem zweiten Substrat (132) angeordnet sind, wobei durch das erste und zweite Substrat (131, 132) ein Laminat bilden oder das die erste, zweite und dritte Antennenspule (121, 122, 123) auf demselben Substrat (13), die erste Antennenspule (121) auf der Frontseite des Substrats (13) und die zweite Antennenspule (122) auf der Rückseite des Substrats (13), angeordnet sind.

4. Übertragungseinheit (1; 2) nach Anspruch 3, **dadurch** gekennnzeichnet, dass das erste und/oder das zweite Substrat (131, 132) bzw. das gemeinsame Substrat (13) oder eine damit verbundene wirbelstromfreie Zwischenlage (130) aus einer hochpermeablen, amorphen Legierung vorzugweise aus Ferritmaterialen oder Sinterstoffen besteht und/oder dass das erste und/oder das zweite Substrat (131, 132) bzw. das gemeinsame Substrat (13) eine Folie ist.

5. Übertragungseinheit (1; 2) nach Anspruch 9, **dadurch** gekenntzeichnet, dass die erste, zweite und oder dritte Antennenspule (121, 122, 123) in die wirbelstromfreie Zwischenlage (130) oder in das wirbelstromfreie Substrat (13, 131, 132) eingearbeitet ist.

6. Übertragungseinheit (1; 2) nach einem der Anspräche 1-5, **dadurch gekennzeichnet, dass** die zweite oder die dritte Antennenspule (122, 123) mit der Steuereinheit (11) verbunden ist, so dass diese während des Empfang oder während des Sendens wahlweise aktivierbar oder deaktivierbar ist.

7. Übertragungseinheit (1; 2) nach einem der Ansprüche 1-6, **dadurch gekennzeichnet, dass** die zweite und/oder die dritte Antennenspule (122, 123) mittels wenigstens einer Kapazität, gegebenenfalls eines angeschlossenen Kondensators (C) einen auf die Frequenz der übertragenen Signale abgestimmten Schwingkreis bilden.

8. Übertragungseinheit (1; 2) nach einem der Ansprüche 1-7, **dadurch gekennzeichnet, dass** die Leiterschleifen der ersten Antennenspule (121) derart um das zugehörige Substrat (13, 131) gewickelt sind, dass je zwei einander auf der Unterseite und der Oberseite des Substrats (13; 131) gegenüberliegende Leiterschleifen parallel verlaufen und eine Ebene (e) definieren, die mit dem Substrat (13; 131) einen Winkel (a) von 30° bis 90° einschliesst.

9. Übertragungseinheit (1; 2) nach Anspruch 8, **dadurch gekennzeichnet, dass** der Winkel (a), den die durch die Leiterschleifenpaare definierten Ebenen mit dem Substrat (13; 131) einschliessen von Leiterpaar zu Leiterpaar gleich ist oder dass der Winkel, den die durch die Leiterschleifenpaare definierten Ebenen mit dem Substrat (13; 131) einschliessen, zwischen Gruppen von Leiterpaaren von einem ersten Winkel (a) zu einem zweiten Winkel von etwa 180° - a ändert und/oder, dass die Abstände (b) zwischen den Leiterschleifenpaaren in der Mitte des Substrats (13; 131) um ein n-faches n*b grösser sind, als im Randbereich des Substrats (13; 131).

10. Übertragungseinheit (1; 2) nach Anspruch 7, 8 oder 9, **dadurch gekennzeichnet, dass** zwei erste Antennenspulen (121A, 121B) vorgesehen sind, die mit der Steuereinheit (11) verbunden sind.

11. übertragungseinheit (1; 2) nach einem der Ansprüche 1-10, **dadurch gekennzeichnet**, das die zweite Antennenspule (122) Leitersegmente wenigstens zwei Leiterschleifen (122A, 122B) aufweist, die in unterschiedlichen Ebenen angeordnet sind, welche parallel zueinander und vorzugsweise parallel zur ersten Antennenspule (121) ausgerichtet sind.

12. Induktives Identifikationssystems mit wenigstens einer Übertragungseinheit (1; 2) nach einem der Ansprüche 1-11.

## Claims

1. Transmission unit (1; 2) of an inductive identification system, particularly a reader or a transponder of a inductive identification system, with a first antenna coil (121) connected to a control unit (11, 21), whose conductor loops surround a first cross sectional area (A1) on a substrate (13, 131), which is mounted or mountable particularly close to the surface of a metal body (5), **characterised in, that** between the first antenna coil (121) and the surface of the metal body (5) a second antenna coil (122) is provided, whose conductor loops, which surround a second cross sectional area (A2), which is at least partially congruent to the first cross sectional area (A1), are connected to a third antenna coil (123), whose conductor loops surround a third cross sectional area (A3), which overlaps the first cross sectional area (A2) not or only partially, wherein the second and the third antenna coil (122, 123) are wound and connected to one another in such a way, that, when receiving a magnetic field, the current induced in the conductor loops of the third antenna coil (123) creates a magnetic field in the second antenna coil (122), which at least approximately runs in phase with the received magnetic field.

2. Transmission unit (1; 2) according to claim 1, **characterised in, that** the geometrical dimensions of the conductor loops of the first and second antenna coil (121, 122) are at least approximately equal and/or that the first and second antenna coil (121, 122) are at least approximately concentrically arranged.

3. Transmission unit (1; 2) according to claim 1 or 2, **characterised in, that** the first antenna coil (121) is arranged on a first substrate (131) and the second and third antenna coil (122, 123) are arranged on a second substrate (132), wherein the first and second substrate (131, 132) build a laminate or that the first, second and third antenna coil (121, 122, 123) are arranged on the same substrate (13), the first antenna coil (121) on the front side of the substrate (13)and the second antenna coil (122) on the back side of the substrate (13).

4. Transmission unit (1; 2) according to claim 3, **characterised in, that** das first and/or the second substrate (131, 132) or the common substrate (13), or an eddy-current-free intermediate layer (130) connected thereto, consist of a highly permeable, amorphous alloy, preferably made of ferrite material or sintered material, and/or that the first and/or the second substrate (131, 132) or the common substrate (13) is a foil.

5. Transmission unit (1; 2) according to claim 4, **characterised in, that** the first, second and/or third antenna coil (121, 122, 123) is worked into the eddy-current-free intermediate layer (130) or into the eddy-current-free substrate (13, 131, 132).

6. Transmission unit (1; 2) according to one of the claims 1 - 5, **characterised in, that** the second or the third antenna coil (122, 123) is connected to the control unit (11), so that during the receipt or during the transmission they can selectively be activated or deactivated.

7. Transmission unit (1; 2) according to one of the claims 1 - 6, **characterised in, that** the second and/or the third antenna coil (122, 123) together with at least one capacitance, if appropriate a connected capacitor (C), build a resonant circuit that is tuned to the frequency of the transmitted signals.

8. Transmission unit (1; 2) according to one of the claims 1-7, **characterised in, that** the conductor loops of the first antenna coil (121) are wound around the related substrate (13, 131) in such a way, that two conductor loops each arranged in parallel opposite to one another on the under side and the upper side of the substrate (13; 131) define a plane (e), which encloses together with the substrate (13; 131) an angle (a) from 30° to 90°.

9. Transmission unit (1; 2) according to claim 8, **characterised in, that** the angle (a) that the planes, which are defined by the pairs of conductor loops, enclose together with the substrate (13; 131), is constant from one to the next pair of conductor loops or that the angle, that the planes, which are defined by the pairs of conductor loops, enclose together with the substrate (13; 131), change between groups of pairs of conductor loops from a first angle (a) to a second angle of approximately 180° - a and/or, that the distances (b) between the pairs of conductor loops are by a factor of n larger in the middle of the substrate (13; 131), than in the edge region of the substrate (13; 131).

10. Transmission unit (1; 2) according to claim 7, 8 or 9, **characterised in, that** two first antenna coils (121A, 121B) are provided, which are connected to the control unit (11).

11. Transmission unit (1; 2) according to one of the claims 1-10, **characterised in, that** the second antenna coil (122) comprises conductor segments at least two conductor loops (122A, 122B), which are arranged in different planes that are aligned in parallel to one another and preferably in parallel to the first antenna coil (121).

12. Inductive identification system with at least one transmission unit (1; 2) according to one of the claims 1-11.

## Revendications

1. Unité de transmission(1; 2) d'un système inductif d'identification, en particulier un appareil de lecture ou un transpondeur d'un système inductif d'identification, avec une première bobine d'antenne (11, 21)reliée à une unité de commande (11, 21), dont les boucles de conducteur entourent une première surface de coupe transversale (A1) sur un substrat (13, 131), qui est monté ou montable en particulier près de la surface d'un corps métallique (5), **caractérisé en ce qu'**entre la première antenne de bobine (121) et la surface du corps métallique (5), il est prévu une seconde bobine d'antenne (122) dont les boucles conductrices qui entourent une seconde surface de section transversale (A2), qui coïncide au moins partiellement avec la première surface de section transversale (A1), sont reliées avec une troisième bobine d'antenne (123) dont les boucles conductrices entourent une troisième surface de section transversale (A3) qui ne chevauche pas ou que partiellement la première surface de section transversale (A2), la seconde et la troisième bobine d'antenne (122, 123) étant enroulées et reliées entre elles de sorte que lors de la réception d'un champ magnétique, le courant induit dans les boucles conductrices de la troisième bobine d'antenne (123) génère dans la seconde bobine d'antenne (122) un champ magnétique qui s'étend au moins approximativement en coïncidence de phase avec le champ magnétique reçu.

2. Unité de transmission (1; 2) selon la revendication 1, **caractérisée en ce que** les dimensions géométriques des boucles conductrices de la première et de la seconde bobines d'antenne (121, 122) sont au moins approximativement identique et/ou la première et la seconde bobine d'antenne (121, 122) sont disposées de manière approximativement concentrique.

3. Unité de transmission (1; 2) selon la revendication 1 ou 2, **caractérisée en ce que** la première bobine d'antenne (121) est disposée sur un premier substrat (131) et la seconde et troisième bobines d'antenne (122, 123) sont disposées sur un second substrat (131, 132), le premier et le second substrat (131, 132) formant un stratifié ou les première, seconde et troisième bobines d'antenne (121, 122, 123) étant montées sur le même substrat (13), la première bobine d'antenne (121) sur la face avant du substrat (13) et la seconde bobine d'antenne (122) sur la face arrière du substrat (13).

4. Unité de transmission (1; 2) selon la revendication 3, **caractérisée en ce que** le premier et/ou le second substrat (131, 132) respectivement le substrat commun (13) ou une couche intermédiaire (130) reliée à ce dernier exempt de courants de Foucault se compose d'un alliage amorphe hautement perméable, de préférence en matériaux ferrites ou en substances frittées et/ou **en ce que** le premier et/ou le seconde substrat (131, 132) respectivement le substrat commun (13) est une feuille commune.

5. Unité de transmission (1; 2) selon la revendication 4, **caractérisée en ce que** la première, la seconde ou la troisième bobine d'antenne (121, 122, 123) sont encastrées dans la position intermédiaire sans courant de Foucault (130) ou sont incorporées dans le substrat exempte de courant de Foucault (13, 131, 132).

6. Unité de transmission (1; 2) selon l'une des revendications précédentes 1 à 5, **caractérisée en ce que** la seconde ou la troisième antenne (122, 123) est reliée avec l'unité de commande (11) de sorte que celle-ci peut être activée ou désactivée au choix pendant la réception ou l'émission,

7. Unité de transmission (1; 2) selon l'une des revendications 1 à 6, **caractérisée en ce que** la seconde et/ou la troisième bobine d'antenne (122, 123) forment au moyen d'au moins une capacité éventuellement un condensateur (C) raccordé un circuit oscillant ajusté à la fréquence des signaux transmis.

8. Unité de transmission (1; 2) selon l'une des revendications 1 à 7 **caractérisée en ce que** les boucles conductrices de la premières bobine d'antenne (121) sont enroulées autour du substrat respectif (13, 131) de sorte que deux boucles conductrices opposées sur la face inférieure et sur la face ce supérieure du substrat (13 ; 131) s'étendent parallèlement et définissent un plan (e) qui entoure avec le substrat (13; 131) un angle compris entre 30° et 90°

9. Unité de transmission (1; 2) selon la revendication 8, **caractérisée en ce que** l'angle (a) que les plans définis par les paires de boucles conductrices entourent avec le substrat (13, 131) est identique d'une paire de conducteurs à l'autre, ou **en ce que** l'angle que les plans définis par les paires de boucles conductrices entourent avec le substrat (13, 131) entre des groupes de paires de conducteurs est modifié entre un premier angle (a) à un second angle d'environ 180° et/ou ne ce que les distances (b) entre les paires de boucles conductrices sont plus grandes entre les paires de boucles conductrices au milieu du substrat (13; 131) de n fois n*b que dans la zone de bordure du substrat (13; 131).

10. Unité de transmission (1; 2) selon la revendication (1; 2) selon la revendication 7, 8 ou 9, **caractérisée en ce qu'**il est prévu deux premières bobines d'antenne (121A, 121B) qui sont reliées à l'unité de commande (11).

11. Unité de transmission (1; 2) selon l'une des revendications 1-10, **caractérisée en ce que** la seconde bobine d'antenne (122) présente des segments conducteurs au moins deux boucles conductrices (122A, 122B) qui sont disposées dans différents plans qui sont orientés parallèlement à la première bobine d'antenne (121).

12. Système d'identification inductif avec au moins une unité de transmission (1; 2) selon l'une des revendications 1 à 11.
